# EUROPEAN PATENT SPECIFICATION

(11) **EP 3 593 641 B1**
(45) Date of publication and mention of the grant of the patent: **20.09.2023**
(21) Application number: 17900213.4
(22) Date of filing: 08.03.2017
(51) Int. Cl.: A23B 7/05, A23B 7/154, A23B 7/16

(54) **USE OF A COMPOSITION FOR CONTROLLING SUPERFICIAL SCALD IN POME FRUIT**
VERWENDUNG EINER ZUSAMMENSETZUNG ZUR KONTROLLE VON OBERFLÄCHLICHER BRÄUNE BEI KERNOBST
UTILISATION D'UNE COMPOSITION POUR LUTTER CONTRE L'ÉCHAUDAGE SUPERFICIEL DES POMACÉES

(43) Date of publication of application: 15.01.2020
(73) Proprietor: Universidad de Talca, Talca CP 3461891 (CL)
(72) Inventor: TORRES DEL CAMPO, Carolina Andrea, Talca (CL)
(74) Representative: Herrero & Asociados, S.L.
(86) International application number: PCT/CL2017/050010
(87) International publication number: WO 2018/161184

(56) References cited:
- EP-A1- 0 228 980
- WO-A1-91/05479
- WO-A1-2013/065051
- CN-B- 103 766 475
- FR-A1- 2 576 303
- US-A- 4 921 715
- US-A- 4 921 715
- US-A1- 2016 081 895
- ZA-A- 9 803 101

## Description

### Technical field

The present invention is related to the technical field of food industries and with products for food preservation; and particularly discloses a new method and use of a composition comprising squalane from olive oil for controlling scald in pome fruits.

### Background

The superficial scald is a physiological disorder caused by cold stress to which fruits are subjected after being harvested, as part of the storage for prolonged periods of time longer than three months. Scald is characterized for producing necrotic lesions on the skin of fruits, which appear during shelf-life after cold storage, generating dark spots that alter their outer appearance. The above causes that the product is not chosen by consumers since it is not visually appealing, losing its commercial value.

Superficial scald is one of the most damaging physiological disorders in pome fruits of prolonged storage, since it causes irreversible damages and limits their prolonged cold storage. Apple varieties such as Granny Smith, Fuji and Red Delicious and pear varieties such as Packham's Triumph, Anjou and Barlett are the most affected cultivars. In Chile, Granny Smith variety is undoubtedly the most susceptible to scald and the cultivar with the highest impairments at commercial levels (Torres C., Hernández O., Fuentes M. (2012). Escaldado superficial en manzanas: nuevos desafíos. Pomáceas, Boletín Técnico, Vol. 12, No. 1). Another variety that is affected is Law Rome (Mditshwa, A. et al. (2016). Classification of 'Granny Smith' apples with different levels of superficial scald severity based on targeted metabolites and discriminant analysis. Journal of Applied Botany and Food Quality, 89).

In apples, the oxidative damage is superficial, manifesting itself as brownish spots on the skin, which generally does not affect fruit flesh. Damage is attributed to oxidation of sesquiterpenes, volatile compounds present in apple wax. During the period of cold storage α-farnesene accumulates, being subsequently oxidized, generating toxic substances such as conjugated trienes which are responsible for symptoms of superficial scald.

In pears, scald appears in two forms: superficial and senescent. In the first one, unlike in apples, harvest time does not affect the level of incidence. On the other hand, senescent scald symptomatology is similar to that of superficial scald, however it may compromise fruit flesh and is manifested in pears stored for more than 6 to 7 months in cold conditions (Torres C., Hernández O., Fuentes M. (2012). Escaldado superficial en manzanas: nuevos desafíos. Pomáceas, Boletín Técnico, Vol. 12, No. 1).

To prevent superficial scald different chemical compounds for application in fruits have been utilized, which affect their quality or prevent maturation. Diphenylamine (DPA) is a chemical compound that is applied in fruits after harvest for scald control in apples and pears (patent US 3,526,519). During the last years the European regulatory authority (EFSA, European Food Safety Authority) has severely questioned the safety of this chemical compound in fruits, indicating that current studies are not sufficient to certify the security of its use. The main concern of said authority is the fact that due to degradation of diphenylamine there is production of nitrosamines, a family of potent carcinogen compounds that contaminate fruits (EFSA (2012). Conclusion on the peer review of the pesticide risk assessment of the active substance diphenylamine. European Food Safety Authority, EFSA Journal 10(1):2486-2527). Therefore, since year 2012 EFSA prohibited the use of DPA in apples and pears in Europe, reducing the allowable limit to 0.1 parts per million in imported fruits (EC (2013). European Commission Regulation No 772/2012, 8 August 2013, amending Annexes II, III and V to Regulation (EC) No 396/2005 of the European Parliament and of the Council as regards maximum residue levels for diphenylamine in or on certain products. Official Journal of the European Union. L 217/2).

Another chemical compound widely used as anti-scalding agent is ethoxyquin, which is mainly used in pears. However, health authority of European Commission in 2011 determined that data known about this substance are still insufficient to conclude that it is safe for environment and for humans. Therefore, ethoxyquin became an active compound not permitted to elaborate phytosanitary products (Commission Decision 2011/143/EU of 3 March 2011 concerning the non-inclusion of ethoxyquin in Annex I to Council Directive 91/414/EEC and amending Commission Decision 2008/941/EC) [notified with number C(2011) 1265]).

A third chemical compound used for the treatment of superficial scald in pears is 1-methylcyclopropene (1-MCP). Even though this compound may be a substitute for DPA or ethoxyquin, its effectiveness has not been completely demonstrated, and it has the additional disadvantage of producing the complete inhibition of pear maturation after harvest during cold storage. The above keeps pears hard, preventing them from reaching the quality required to consumption (Chiriboga Varea, M. D. L. Á. (2012). Universidad de Lleida, España. Aspectos bioquimicos del bloqueo de la maduración de peras 'Conference' tratadas con 1-metilciclopropeno (1-MCP) y aplicación de sistemas de control. Capita Io 5.1. Escaldado superficial)*.*

The estate of the art also discloses compositions to control fruit scald whose active ingredients are terpenic compounds. Squalene is a triterpenic compound containing 30 carbon atoms (C₃₀H₅₀) which possess an important role as a precursor of sterols and is produced by a wide range of organisms from bacteria to human beings. This compound has been used as a natural antioxidant and in pharmaceutical industry. The main source for obtaining squalene is from an animal origin, specifically shark liver oil, however, current concerns about environment and conservation of marine species motivate the search of new alternative sources of squalene (Spanova, M., & Daum, G. (2011). Squalene-biochemistry, molecular biology, process biotechnology, and applications. European Journal of Lipid Science and Technology, 113(11), 1299-1320).

The publication of Nordby, H. E., & McDonald, R. E. (1990). Squalene applied to grapefruit prevents chilling injury. HortScience, 25(9), 1094, describes a composition in aerosol to prevent chilling injury in citric fruits, specifically grapefruits, consisting in squalene in a concentration between 5-10% dissolved in hexane. Treated fruits were stored at 5°C for four weeks and a reduction of 69-80% in incidence of chilling injury was observed on them.

Squalane (IUPAC name 2,6,10,15,19,23-hexamethyltetracosane) is an organic triterpenic compound with a chemical formula of C₃₀H₆₂ that possess different properties. It is a colorless, odorless and tasteless hydrocarbonated oil having a high physical and chemical stability and an elevated resistance to chemical oxidation. Squalane is a product naturally produced in small quantities in skin and it is an important component of sebum, it helps to maintain the skin moisturised. For this reason, squalane has been extensively used as an important ingredient in cosmetic industry (Camin, F. et al. (2010). Stable isotope ratios of carbon and hydrogen to distinguish olive oil from shark squalene-squalane. Rapid communications in mass spectrometry, 24(12), 1810-1816).

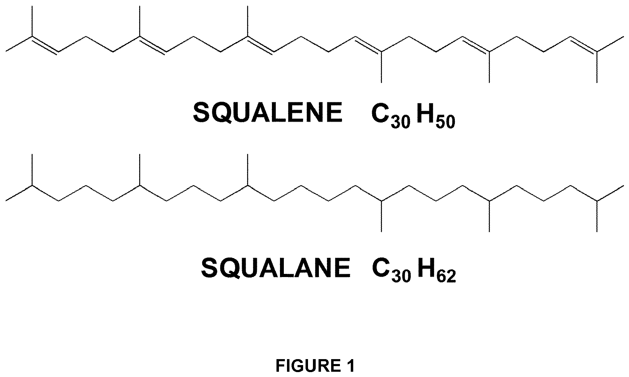

Traditionally, squalane is produced from catalytic hydrogenation of squalene. Since squalene in its chemical structure possess numerous double bonds between carbon atoms, when it enters in contact with air is oxidised and produces compounds with undesired properties. By contrast, squalane does not have double bonds in its chemical structure, which makes it more stable in comparison with squalene (Brunner, G. et al. (2009). Phase Equilibrium of Hydrogen, Carbon Dioxide, Squalene, and Squalane. Journal of Chemical & Engineering Data, 54(5), 1598-1609). Figure 1 shows the chemical structures of squalene and squalane.

Depending upon the source where squalene is obtained as raw material to produce squalane, the derived product will have different types of impurities. According to the publication McPhee, D. et al. (2014). Squalane from Sugarcane. Cosmetics & Toiletries magazine, Vol. 129, No.6, even squalane of 100% purity contains impurities. Squalene of animal origin obtained from shark liver contains environmental pollutants such as polychlorinated biphenyls (PCBs), dioxins and heavy metals that accumulate in the liver, which remain after obtaining squalane. By contrast, squalane obtained from squalene from raw materials of plant origin, particularly olive oil and sugar cane does not contain these contaminants, instead it includes molecules such as phytosterol esters and waxes of hydrocarbon long chain.

Patent US 4,921,715 describes a method to protect citric fruits from chilling injury, comprising the application of a medium containing squalene or a derived compound such as squalane (Sigma Chemical Company). Said document describes that in an experimental assay, when these compounds are applied on citric fruits they are effective in reducing chilling injury, allowing them to be stored at low temperatures for a prolonged period. Particularly, the document describes an experiment where grapefruit was sprayed with Triton X-100 supplemented with squalane 1% or squalene 0.25% and then the fruit was stored at 40°F (approximately 4.4 °C) during 3 to 5 weeks. It was found that application of these solutions to citric fruits significantly increased resistance to chilling injury.

Patent US 5,376,391 describes a method and a composition to improve stability of fruits, vegetables or fungi, comprising at least one polysaccharide polymer, a preservant and a preservative agent and an acidifier. As a general disclosure, it indicates that the composition may optionally include an agent used for preventing chilling injury, such as squalene.

As a consequence, there is still a lack of an optimized solution to address the problem of superficial scald in apples and pears, which allows to protect them for long periods and at the same time maintaining fruit quality.

### Summary of invention

The invention is set out in the appended set of claims.

### Brief description of the drawings

Figure 1 describes the chemical structures of squalene and squalane.
Figure 2 describes the effect of application of squalane and squalene of animal origin on the surface of Granny Smith apples and the evaluation of incidence in superficial scald (SS).
Figure 3 shows the reduction of the incidence in superficial scald in Granny Smith apples when treated with different prototypes of emulsions whose active ingredient is squalane from plant origin.
Figure 4 shows the reduction on the incidence in superficial scald in Packham's Triumph pears in three commercial crops (A and B) when treated with an emulsion whose active ingredient is squalane from plant origin.
Figure 5 shows the reduction of the presence of conjugated trienes in Granny Smith apples treated with emulsions of squalane of plant origin.
Figure 6A shows the quantitation of firmness of the flesh in Granny Smith apples after application of an emulsion comprising squalane of plant origin. Figure 6B shows a graph representing the skin color of Packham's Triumph pears after application of an emulsion comprising squalane of plant origin.

### Detailed description of the invention

The present invention provides the use of a composition for controlling scald in pome fruits, wherein the said composition comprises squalane from olive oil as active ingredient in a concentration of 70% v/v and an appropriate vehicle selected from:
- oleic acid as emulsifying agent in a concentration of 20% v/v, ammonia in a concentration of 4% v/v, and deionized water in a concentration of 6% v/v; or
- palm fatty acid as emulsifying agent in a concentration of 20% v/v, ammonia in a concentration of 4% v/v, and deionized water in a concentration of 6% v/v; or
- a primary alcohol having 9 to 15 carbon atoms as emulsifying agent in a concentration of 30% v/v; or
- sorbitan ester as emulsifying agent in a concentration of 30% v/v;
wherein said composition is diluted to a concentration of 0.1 - 10% v/v.

The invention also refers to a method for controlling scald in pome fruits, comprising the application of a composition based on squalane from olive oil comprising squalane from olive oil as active ingredient in a concentration of 70% v/v and an appropriate vehicle selected from:
- oleic acid as emulsifying agent in a concentration of 20% v/v, ammonia in a concentration of 4% v/v, and deionized water in a concentration of 6% v/v; or
- palm fatty acid as emulsifying agent in a concentration of 20% v/v, ammonia in a concentration of 4% v/v, and deionized water in a concentration of 6% v/v; or
- a primary alcohol having 9 to 15 carbon atoms as emulsifying agent in a concentration of 30% v/v; or
- sorbitan ester as emulsifying agent in a concentration of 30% v/v,
and diluted to a concentration of 0.1 - 10% v/v to the surface of the pome fruits. In this way, it is avoided the physiological disorder that affects fruits when stored in cold conditions and controlled atmosphere to preserve them for long periods. This phenomenon is mainly manifested as dark spots on the surface or skin of fruits, which then can spread to the fruit flesh.

In the present invention, squalane from olive oil, also named phyto-squalane, is used as active ingredient or principle in an anti-scald composition for pome fruits.

The composition must be applied on the surface of any pome fruit. The term "pome" or "pomaceous" should be understood as those fruits of pome type from the family of Rosaceae, such as apples, pears, quinces, medlars, loquats, among others, including all species, hybrids and existing varieties. Preferably, pome fruits are apples and pears. In a preferred embodiment, apples belong to varieties Granny Smith, Golden Delicious, Gala, Fuji, Braeburn, Pink Lady, Rome Beauty, Stayman, Turley and Cortland. In another preferred embodiment, pears belong to varieties Packham's Triumph, Beurré D'Anjou, Red Anjou and Conférence. In another preferred embodiment, quinces belong to varieties Champion, Common and Wranja. In another favored embodiment, medlars belong to varieties Argelino, Tanaka and Golden Nugget.

Squalane used as active ingredient for controlling superficial scald in pome fruits of the present invention is obtained from olive oil. Other sources of squalane of plant origin that are not part of the present invention are plants of rice, palm, amaranth; or sugars or cellulosic biomass derived from plants such as sugar cane. Due to the plant origin of the raw material to obtain squalane is that the latter is named "squalane of plant origin or phyto-squalane". These raw materials can be then treated by different processes for obtaining squalane. In a preferred embodiment of the present invention, squalane of plant origin is obtained from hydrogenation of squalene originated from olive oil. An example of said procedure to obtain squalane is specified in patent document ES 8,701,701, which comprises hydrogenation of subproducts from refinated olive oil, and in the publication Ciriminna R. y cols. (2014). Catalytic Hydrogenation of Squalene to Squalane. Organic Process Research & Development, 18(9), 1110-1115.

Other alternative to obtain squalane which is not part of the present invention and is presented for illustration purposes only, is from raw material obtained from sugars of plants that are fermented to obtain farnesene, which is then dimerised and hydrogenated to obtain squalane (F. Laserson (2013). Neossance, 3rd generation squalane. Expression Cosmétique, AZ Guide of Cosmetic Ingredients, pp 325-328).

The composition for controlling scald or "anti-scald" in pome fruits which comprises squalane from olive oil as active ingredient in a concentration of 70% v/v, additionally comprises an appropriate vehicle. Said vehicle comprises an emulsifying agent and other compounds for obtaining an emulsion. The vehicle of the composition used in the present invention is selected from:
- oleic acid 20% v/v, ammonia 4% v/v and deionized water 6% v/v; or
- palm fatty acid 20% v/v, ammonia 4% v/v and deionized water 6% v/v; or
- a primary alcohol having 9 to 15 carbon atoms, preferably a primary alcohol with 12 to 14 carbon atoms ethoxylated with ethylene oxide, such as Neodol^{®} 30% v/v; or
- sorbitan ester 30% v/v, preferably polyoxyethylenesorbitan monolaurate (Tween^{®} - 21).

The different compositions according to the present invention, are diluted to 0.1 - 10% v/v in aqueous solution before being applied on pome fruits. Preferentially, dilution range is 1- 5% v/v in water.

Optionally, the composition may comprise a stabilizing agent or a pH regulator agent (between 8-11). The composition may have a liquid, gaseous, spray, gelatin or powder form.

The present invention also provides a method for controlling scald in pome fruits, comprising the steps of (i) providing a composition whose active principle is squalane from olive oil in a concentration of 70% v/v and which further comprises an appropriate vehicle as previously mentioned, (ii) diluting said composition to a concentration of 0.1 - 10% v/v, and (iii) applying said diluted composition in such a way of contacting it with the surface of pome fruits. The application may be performed topically through immersion, nebulization or spray, or any other form that allows the contact of the composition with the surface of fruits during at least the time of one second. In a preferred embodiment, the composition is applied by immersion or submerging the pome fruits in the same, during a period of one minute. In another preferred embodiment, the composition is applied after fruits are harvested, during a period not longer than 24 hours post-harvest. The application must be performed before storage in cold conditions.

The use of the composition of the present invention for controlling surface scald produced by cold in pome fruits has various advantages. The first one is having an anti-scald activity higher than 90% in apples and higher than 98% in pears. The fact that squalane is obtained from olive oil makes it suitable for commercialization as sustainable and eco-friendly organic products. Squalane from plant or vegetable origin is a clear, odorless and colorless oil which is also very stable to oxidation and supports high temperatures. Thanks to the physicochemical properties of squalane together with the appropriate vehicles according to the composition of the present invention, it is possible to obtain an emulsion suitable and permeable in the lipid surface of waxy fruits cuticles, as the case of pome fruits, when stored under cold conditions (between -0.5 y 1°C) for prolonged periods, even 28 weeks (7 months) and a week at ambient temperature (20°C). The lower the cuticle thickness, the better is composition effectiveness, as observed for the case of pears.

When compared with citric fruits, pome fruits such as apples, pears, quinces, medlars and loquats have an edible skin. The composition used in the present invention allows the control of scald in said fruits in significant rates, without producing adverse effects when consumed by humans. Regarding the quality of pome fruits object of application of the composition of the present invention, the application of squalane from olive oil causes neither deterioration nor alteration of maturity in fruits.

Having thus described the preferred embodiments of the invention with regard to the figures accompanying description, it will be understood that the invention is not limited to said preferred embodiments, and that any expert in the field could perform modifications, maintaining the core of the invention.

Provided below there are presented examples of realization of the invention, which have been included with the purpose of illustrating the invention, their preferred embodiments and comparative examples, but they should not be in any case considered to restrict the scope of the patent application, which is only limited by the content of claims attached herein.

### EXAMPLES

### EXAMPLE 1. Effect of the application of squalene and squalane of animal origin in pome fruits to control superficial scald (Comparative example).

The selection of squalane of plant origin as an anti-scald active ingredient to control surface scald in pome fruits is not a trivial task and it is sustained according to the results showed below, where squalane from animal origin does not have anti-scalding activity in pome fruits.

A study was performed in which a composition whose active ingredient was squalene (Merck ^{®}, Germany) of animal origin (shark liver) or squalene obtained from hydrogenation of it (Merck ^{®}, Germany), according to Table 1 as follows.

**Table 1. Formulations based on squalene and squalane of animal origin (shark liver).**

| **Active ingredient** | **Formulation** | **Dose of use in immersion** |
|---|---|---|
| Squalene of animal origin | Squalene (Merck) 100% | 2% v/v dilution of the formulation in water |
| | or | |
| | Squalene (Merck) 70% v/v | |
| | Polysorbate (2-[2-[3,4-bis(2-hydroxyethoxy) oxolan-2-yl]-2-(2-hydroxyethoxy) ethoxy] ethyl (E)-octadec-9-enoate) | |
| | 15% v/v | |
| | or | |
| | Squalene (Merck) 80% v/v | |
| | Sorbitan Monooleate ([2-[(2R,3S,4R)-3,4-dihydroxyoxolan-2-yl]-2-hydroxyethyl] | |
| | (Z)-octadec-9-enoate) 15% v/v | |
| Squalane of animal origin | Squalane (Merck) 100% | 2% v/v dilution of the formulation in water |

The previous formulations were diluted in water according to Table 1 and then healthy Granny Smith apples were immersed in said diluted formulations for one minute, immediately after the fruit was harvested. One hundred apples were obtained from La Alborada Garden (VII Region, Chile) of season 2010/2011 and after application of formulations they were stored in conventional cold (without modification of atmospheric gases) between 0 - 1°C and relative humidity between 85-90% during 120 and 180 days. Then, fruits were maintained at ambient temperature (20°C) for 7 days. One hundred apples were used as a control and did not receive treatment but were subjected to the same temperature conditions previously mentioned. The statistical analysis was performed by an ANOVA test and Tukey (HSD) mean separation test. Different letters mean significant differences between groups, (n.s. not significant).

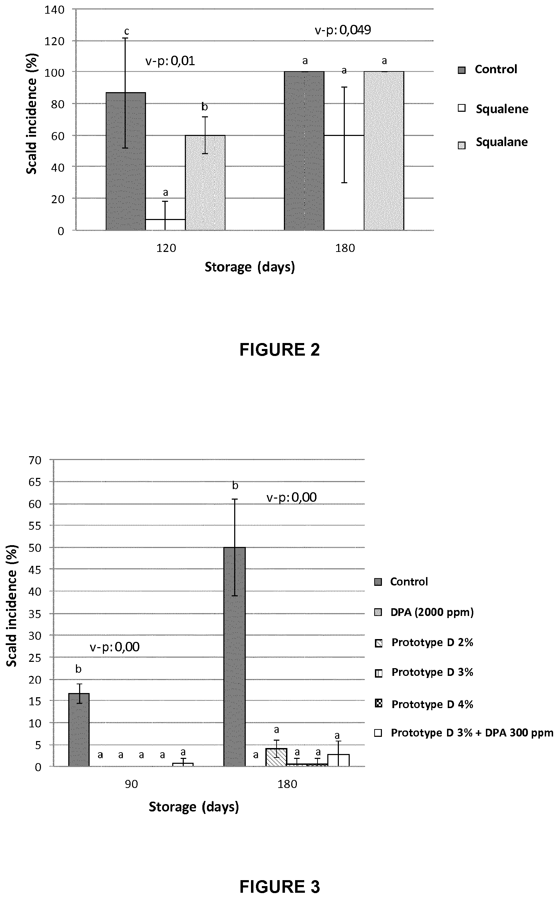

As pointed in Figure 2, results showed that only after 120 days of storage in conventional cold and 7 days in ambient temperature (20°C) storage, squalene of animal origin significantly reduced the incidence (number of sick fruits/number of total fruits) of surface scald in comparison with control apples, but not in the case of squalane of animal origin which produced a 60% of scalded fruits. Moreover, after 180 days of storage in cold conditions and 7 days at ambient temperature (20°C) no significant differences were observed between treatments with squalene and squalane of animal origin and control group, wherein squalene of animal origin did not produce a significant anti-scalding effect. These results show that squalane of animal origin does not have anti-scalding activity in pome fruits, wherein 100% of fruits treated with said compound suffered surface scalding, just as the control group of untreated apples.

It is important to highlight that, even though squalene of animal origin reduces incidence in surface scalding after 120 days of storage (Figure 2), current usage of this compound or squalane derived from it of animal origin is not viable due to environmental reasons and marine fauna conservation which prohibits the use of sharks as raw material (Spanova, M., & Daum, G. (2011). Squalene-biochemistry, molecular biology, process biotechnology, and applications. European Journal of Lipid Science and Technology, 113(11), 1299-1320); and also, since it is obtained from the liver, highly toxic compounds and heavy metals may be present, which are harmful for health (McPhee, D. et al. (2014). Squalane from Sugarcane. Cosmetics & Toiletries magazine, Vol. 129, No.6), as previously mentioned in the state of the art.

### Example 2. Use of squalane of plant origin as anti-scalding active ingredient in pome fruits.

A composition was prepared as an emulsion, whose active ingredient was squalane (Phytosqualane, Sophim, France) of plant origin, according to Table 2 below. Said composition was named "Prototype D".

**Table 2. Formulation of a composition based on squalane of plant origin.**

| **Active ingredient** | **Formulation** | **Dose of use in immersion** |
|---|---|---|
| Squalane of plant origin | squalane 70% v/v | 2, 3 and 4% dilution of the formulation in water |
| | oleic acid 20% v/v | |
| | ammonium hydroxide (25%) 4% v/v | |
| | deionised water * | |

| | | |
|---|---|---|
| **: Formulation equivalent to prototype number 7 of Table 3 shown hereinafter.* | | |

The squalane used was obtained from hydrogenation of squalene from refining of olive oil (information available in www.sophim.com/en/phytosqualan-0). The effect of the composition in the different doses was assessed in apples and pears.

A number of 600 healthy Granny Smith apples were harvested from La Alborada Garden (VII Region, Chile) in season 2013/2014, and were treated by immersion in "Protoype D" composition in different doses diluted in water, and were stored for 90 and 180 days in conventional cold conditions between 0 - 1°C and 85-90% of relative humidity, plus seven days of exposure at ambient temperature (20°C). Untreated fruits were used as negative control but were subjected to the same mentioned conditions of temperature. Diphenylamine was used as a positive control (DPA, 2.000 ppm) while a group was treated with "Prototype D" composition (squalane of plant origin, 3%) and DPA (300 ppm). Each group used an amount between 50 and 100 apples. Then, incidence of surface scald in fruits was assessed. The statistical analysis was performed by an ANOVA test and Tukey (HSD) mean separation test. Different letters mean significant differences between groups.

As shown in Figure 3, all tested formulations whose active ingredient is squalane of plant origin reduced the incidence in surface scald in more than 98%, which was statistically significant in comparison with the fruits used as controls that were untreated.

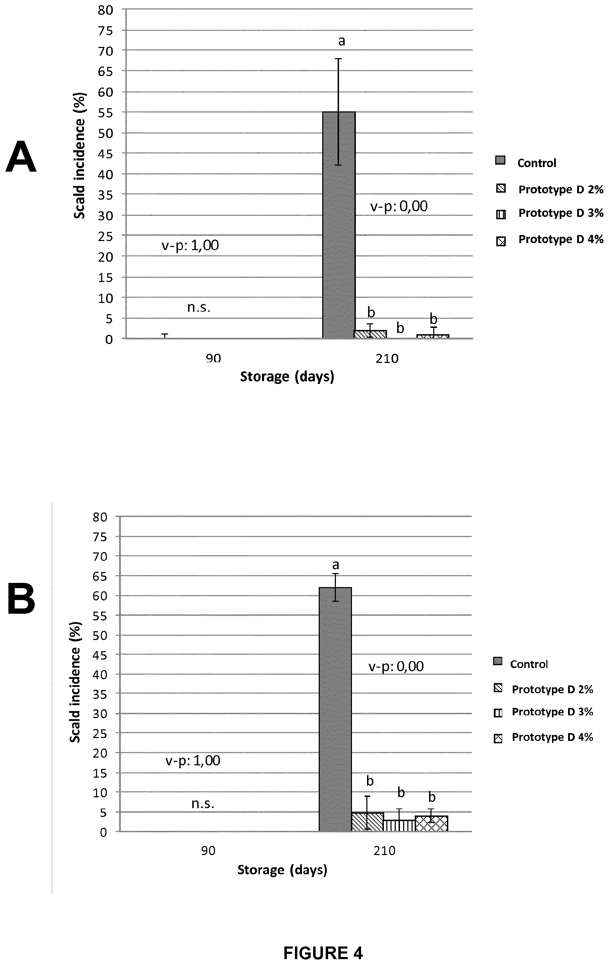

In parallel, the same previous experiment was repeated using Packham's Triumph pears from two commercial gardens from season 2013/2014. The fruits were superficially treated with "Prototype D" composition diluted in water at 2-4% v/v whose active ingredient is squalane of plant origin and then were stored during 90 and 120 days under conventional cold conditions at -0,5 °C and relative humidity between 85 and 90%, plus seven days of exposure to ambient temperature (20°C). Untreated fruits were used as a negative control. The statistical analysis was performed by an ANOVA test and Tukey (HSD) mean separation test. Different letters mean significant differences between groups. Then, the incidence of superficial scald was assessed and it was found that all prototypes of squalane compositions (Phytosqualan, Sophim, Francia) of plant origin in concentrations between 2-4% v/v used decreased the incidence of surface scald in 95-98%, as shown in Figure 4.

Considering the previous results it is clear that squalane of plant origin as active ingredient has an anti-scald activity which is effective to avoid the generation of undesirable dark spots that are produced when pome fruits are stored under cold conditions. Particularly, in the case of apples, tested formulations reduced the incidence of surface scald in more than 98% at 180 days (Figure 3); while in the case of pears, compositions based on squalane of plant origin reduced scald incidence between 95-98% at 210 days (7 months) (Figure 4).

### Example 3. Compositions comprising squalane of plant origin as anti-scald active ingredient for pome fruits.

Applications of oils in a pure form are not commercially viable since it is very toxic for fruits, causing damage in lenticels and necrosis after its use. Therefore, it is preferred to obtain a composition of squalane which also contains an appropriate vehicle to form an emulsion and, in this way, stabilize the active ingredient before its application to the surface of pome fruits.

Different compositions comprising squalane of plant origin as active ingredient were tested for anti-scald activity in pome fruits, and for this, different emulsifying, emulgent or surfactant stabilizing agents were analyzed to obtain an emulsion. The squalane used was obtained from hydrogenation of squalene from refinated olive oil (information available in www.sophim.com/en/phytosqualan-0).

Table 3 shows proportions of squalane of plant origin used and different emulsifying agents tested, highlighting those prototypes that were able to form an emulsion (7, 11, 13 y 22).

**Table 3. Proportion (%) of emulsifying agent and active ingredient in different tested prototypes.**

| **Emulsifying agents and active ingredient** | **1** | **2** | **3** | **4** | **5** | **6** | **7** | **8** | **9** | **10** | **11** | **12** |
|---|---|---|---|---|---|---|---|---|---|---|---|---|
| Squalane of plant origin (Phytosqualan^{®}) | 70 | 70 | 70 | 70 | 70 | 70 | 70 | 70 | 70 | 70 | 70 | 70 |
| Polyoxyethylene sorbitan monooleate (TWEEN^{®} 80) | 15 | 5 | | | | | | | | | | |
| Sorbitan monooleate (SPAN^{®} 80) | 15 | | 15 | | 15 | | | | | | | |
| Polyoxyethylenesorbitan monostearate (TWEEN^{®} 60) | | | 15 | | | | | | | | | |
| Sorbitan monolaurate (SPAN^{®} 20) | | 25 | | 15 | | | | | | | | |
| Polyoxyethylene sorbitan monolaurate (TWEEN^{®} 21) | | | | 15 | 15 | | | | | | | |
| Oleic acid | | | | | | 20 | 20 | | | | | 10 |
| Palm fatty acid | | | | | | | | | | 20 | 20 | |
| Myristic acid | | | | | | | | 20 | 20 | | | 10 |
| KOH | | | | | | 4 | | 5 | | 4 | | 5 |
| Ammonia | | | | | | | 4 | | 5 | | 4 | |
| Deionised water. | | | | | | 6 | 6 | 5 | 5 | 6 | 6 | 5 |
| *Generation of an emulsion* | *NO* | *NO* | *NO* | *NO* | *NO* | *NO* | ***YES*** | *NO* | *NO* | *NO* | ***YES*** | *NO* |

| **Emulsifying agents and active ingredient** | **13** | **14** | **15** | **16** | **17** | **18** | **19** | **20** | **21** | **22** | | |
|---|---|---|---|---|---|---|---|---|---|---|---|---|
| Squalane of plant origin (Phytosqualan^{®}) | *70* | *70* | *70* | *70* | *70* | *70* | *70* | *70* | *70* | *70* | | |
| Ethoxylated alcohol (Neodol^{®}) | *30* | | | | | | | | | | | |
| Ethoxylated alcohol (Rhenipal 10) | | *30* | | *10* | | | | | | | | |
| Polyethylene glycol nonylphenyl ether (Rhenipal 6) | | | *30* | *20* | | | | | | | | |
| Polyoxyethylene sorbitan monooleate (TWEEN^{®} 80) | | | | | *20* | *15* | | | | | | |
| Sorbitan monooleate (SPAN^{®} 80) | | | | | *10* | | *10* | | *5* | | | |
| Polyoxyethylenesorbitan monostearate (TWEEN^{®} 60) | | | | | | | *20* | | | | | |
| Sorbitan monolaurate (SPAN^{®} 20) | | | | | | *15* | | *10* | | | | |
| Polyoxyethylene sorbitan monolaurate (TWEEN^{®} 21) | | | | | | | | *20* | *25* | *30* | | |
| *Generation of an emulsion* | ***YES*** | *NO* | *NO* | *NO* | *NO* | *NO* | *NO* | *NO* | *NO* | ***YES*** | | |

From Table 3 it is observed that it is not trivial to obtain an emulsion of squalane of plant origin, wherein the preferred emulsifiers are oleic acid, palm fatty acid, a surfactant primary alcohol such as Neodol^{®} and sorbitan ester such as Tween^{®} - 21.

### Example 4. Evaluation of quality parameters in pome fruits treated with emulsions of squalane of plant origin.

Among symptoms of surface scald in pome fruits there exist brownish or dark spots on fruit skin whose origin is attributed to oxidation of α-farnesene, natural compound present in the fruit, and produces reactive conjugated trienes. These compounds can even cause death of hypodermal plant cells in case of severe damage (Moggia, C., Moya-León, M. A., Pereira, M., Yuri, J. A., & Lobos, G. A. (2010). Effect of DPA [Diphenylamine] and 1-MCP [1-methylcyclopropene] on chemical compounds related to superficial scald of Granny Smith apples. Spanish Journal of Agricultural Research, 8(1), 178-187).

The concentration of conjugated trienes was estimated by means of spectrophotometry at different wavelengths. Measurement consisted in extracting fruit skin samples from a known area and submerging them in n-hexane for three minutes to then take an aliquot and reading at different wavelengths in a spectrophotometer. Treatments consisted in application of an emulsion based on squalane of plant origin and oleic acid, diluted at 2-4% v/v in water (Prototype D or 7 in Table 3) and an untreated control group. Measurements were performed after 90 and 180 days of storage in conventional cold conditions (without modification of atmospheric gases) plus one day of exposure at ambient temperature (20°C). Diphenylamine (DPA) was applied as positive control (2,000 ppm) and untreated apples were used as a negative control. One of the treatment groups consisted in the application of a mixture of DPA (300 ppm) and the emulsion based on squalane of plant origin diluted in water at 3% v/v. The statistical analysis was performed by an ANOVA test and Tukey (HSD) mean separation test. Different letters mean significant differences between groups.

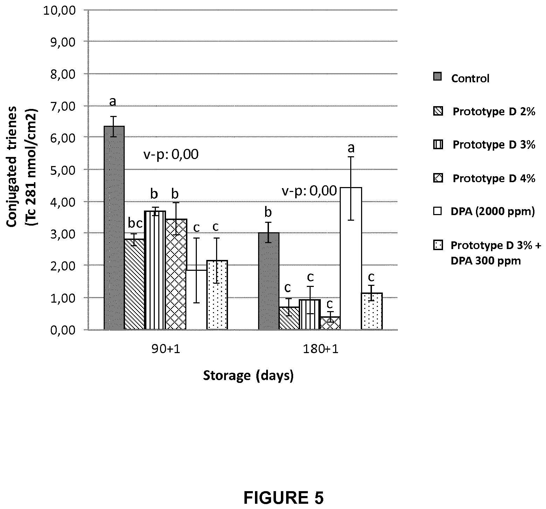

According to the results shown in Figure 5, application of the formulation based on squalane of plant origin in the present invention significantly reduced the accumulation of conjugated triene compounds at 90 and 180 days, being in this case significantly lower than diphenylamine.

Furthermore, in another trial during season 2013/2014, maturity parameters such as firmness of the flesh and skin color in apples and pears were measured. Firmness of fruit flesh was assessed with an automatic fruit texture analyzer (Model G-15, Guss) and skin color was measured with a colorimeter (Minolta, CR 20°, Japan). Evaluations were performed after the application through immersion of the fruits in an emulsion based on squalane of plant origin and oleic acid (Prototype D or 7 in Table 3) and storage for 90 and 210 days under conventional cold plus one or seven days at ambient temperature (20°C). The statistical analysis was performed by an ANOVA test and Tukey (HSD) mean separation test. Different letters mean significant differences between groups.

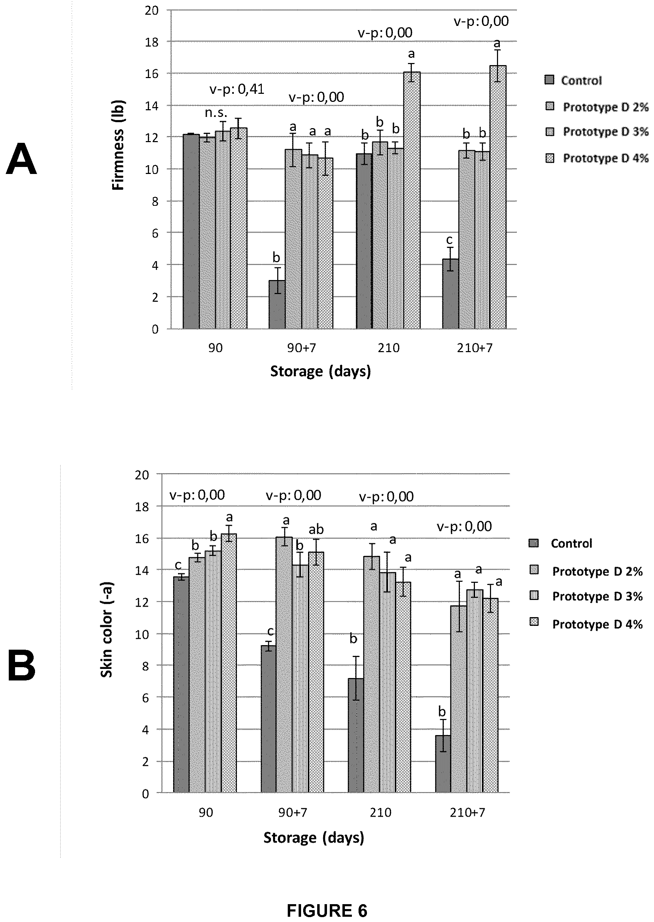

As shown in Figure 6, application of the anti-scald emulsion based on squalane of plant origin in apples and pears showed positive effects in quality parameters of fruit, such as a higher firmness (A) and a lower degradation of skin color (B) when compared to untreated control fruits but subjected to the same mentioned conditions of temperature.

## Claims

1. Use of a composition comprising squalane from olive oil for controlling scald in pome fruits, wherein the composition comprises squalane in a concentration of 70% v/v and a vehicle selected from:
- oleic acid as emulsifying agent in a concentration of 20% v/v, ammonia in a concentration of 4% v/v, and deionized water in a concentration of 6% v/v; or
- palm fatty acid as emulsifying agent in a concentration of 20% v/v, ammonia in a concentration of 4% v/v, and deionized water in a concentration of 6% v/v; or
- a primary alcohol having 9 to 15 carbon atoms as emulsifying agent in a concentration of 30% v/v; or
- sorbitan ester as emulsifying agent in a concentration of 30% v/v;
wherein said composition is diluted for its use to a concentration of 0.1 - 10% v/v.

2. The use of claim 1, wherein the primary alcohol is a primary alcohol with 12 to 14 carbon atoms ethoxylated with ethylene oxide.

3. The use of claim 1, wherein sorbitan ester is polyoxyethylene sorbitan monolaurate.

4. The use of any one of the preceding claims, wherein the composition is diluted to a concentration of 1 - 5% v/v.

5. The use of any one of the preceding claims, wherein pome fruits are apples or pears.

6. A method for controlling scald in pome fruits, comprising the following steps:
i) providing a composition comprising squalane from olive oil in a concentration of 70% v/v and a vehicle selected from:
- oleic acid as an emulsifying agent in a concentration of 20% v/v, ammonia in a concentration of 4% v/v, and deionized water in a concentration of 6% v/v; or
- palm fatty acid as the emulsifying agent in a concentration of 20% v/v, ammonia in a concentration of 4% v/v, and deionized water in a concentration of 6% v/v; or
- a primary alcohol having 9 to 15 carbon atoms as emulsifying agent in a concentration of 30% v/v; or
- sorbitan ester as an emulsifying agent in a concentration of 30% v/v;
ii) diluting said composition to a concentration of 0.1 - 10% v/v; and
iii) contacting said diluted composition with the surface of pome fruits.

7. The method of claim 6, wherein the contact between the diluted composition and the surface of pome fruits is performed by means of immersion, nebulization or spray.

8. The method of claim 6, wherein the contact between the diluted composition and the surface of pome fruits is performed during at least one second.

9. The method of any one of claims 6 to 8, wherein the pome fruits are apples or pears.

10. The method of any one of claims 6 to 9, wherein in step ii) the composition is diluted to a concentration of 1 - 5% v/v.

## Patentansprüche

1. Verwendung einer Zusammensetzung, umfassend Squalan aus Olivenöl, zur Kontrolle der Schalenbräune bei Kernobst, wobei die Zusammensetzung Squalan in einer Konzentration von 70 Vol.-% und ein aus Folgendem ausgewähltes Vehikel umfasst:
- Ölsäure als Emulgator in einer Konzentration von 20 Vol.-%, Ammoniak in einer Konzentration von 4 Vol.-% und entionisiertes Wasser in einer Konzentration von 6 Vol.-%; oder
- Palmfettsäure als Emulgator in einer Konzentration von 20 Vol.-%, Ammoniak in einer Konzentration von 4 Vol.-% und entionisiertes Wasser in einer Konzentration von 6 Vol.-%; oder
- einem primären Alkohol, der 9 bis 15 Kohlenstoffatome aufweist, als Emulgator in einer Konzentration von 30 Vol.-%; oder
- Sorbitanester als Emulgator in einer Konzentration von 30 Vol.-%;
wobei die Zusammensetzung für ihre Verwendung auf eine Konzentration von 0,1-10 Vol.-% verdünnt wird.

2. Verwendung nach Anspruch 1, wobei der primäre Alkohol ein mit Ethylenoxid ethoxylierter primärer Alkohol mit 12 bis 14 Kohlenstoffatomen ist.

3. Verwendung nach Anspruch 1, wobei der Sorbitanester Polyoxyethylensorbitanmonolaurat ist.

4. Verwendung nach einem der vorhergehenden Ansprüche, wobei die Zusammensetzung auf eine Konzentration von 1-5 Vol.-% verdünnt wird.

5. Verwendung nach einem der vorhergehenden Ansprüche, wobei das Kernobst Äpfel oder Birnen sind.

6. Verfahren zur Kontrolle der Schalenbräune von Kernobst, umfassend die folgenden Schritte:
i) Bereitstellen einer Zusammensetzung, die Squalan aus Olivenöl in einer Konzentration von 70 Vol.-% und ein aus Folgendem ausgewähltes Vehikel umfasst:
- Ölsäure als Emulgator in einer Konzentration von 20 Vol.-%, Ammoniak in einer Konzentration von 4 Vol.-% und entionisiertes Wasser in einer Konzentration von 6 Vol.-%; oder
- Palmfettsäure als Emulgator in einer Konzentration von 20 Vol.-%, Ammoniak in einer Konzentration von 4 Vol.-% und entionisiertes Wasser in einer Konzentration von 6 Vol.-%; oder
- einem primären Alkohol, der 9 bis 15 Kohlenstoffatome aufweist, als Emulgator in einer Konzentration von 30 Vol.-%; oder
- Sorbitanester als Emulgator in einer Konzentration von 30 Vol.-%;
ii) Verdünnen der Zusammensetzung auf eine Konzentration von 0,1-10 Vol.-%; und
iii) In-Kontakt-Bringen der verdünnten Zusammensetzung mit der Oberfläche von Kernobst.

7. Verfahren nach Anspruch 6, wobei das In-Kontakt-Bringen der verdünnten Zusammensetzung mit der Oberfläche von Kernobst durch Eintauchen, Zerstäuben oder Sprühen erfolgt.

8. Verfahren nach Anspruch 6, wobei das In-Kontakt-Bringen der verdünnten Zusammensetzung mit der Oberfläche von Kernobst über mindestens eine Sekunde erfolgt.

9. Verfahren nach einem der Ansprüche 6 bis 8, wobei das Kernobst Äpfel oder Birnen sind.

10. Verfahren nach einem der Ansprüche 6 bis 9, wobei in Schritt ii) die Zusammensetzung auf eine Konzentration von 1-5 Vol.-% verdünnt wird.

## Revendications

1. Utilisation d'un composé contenant du squalane extrait d'huile d'olive pour contrôler les taches sur les fruits à pépins, lequel composé contient du squalane dans une concentration de 70% vol. et un vecteur sélectionné parmi
- de l'acide oléique comme agent émulsifiant dans une concentration de 20% vol., de l'ammoniaque dans une concentration de 4% vol. et de l'eau déionisée dans une concentration de 6% vol. ou
- de l'acide gras d'huile de palme comme agent émulsifiant dans une concentration de 20% vol., de l'ammoniaque dans une concentration de 4% vol. et de l'eau déionisée dans une concentration de 6% vol. ou
- un alcool primaire ayant de 9 à 15 atomes de carbone comme agent émulsifiant dans une concentration de 30% vol. ou
- un ester de sorbitan comme agent émulsifiant dans une concentration de 30% vol.,
ledit composé étant dilué pour son utilisation à une concentration de 0,1 à 10% vol.

2. Utilisation selon la revendication 1, dans laquelle l'alcool primaire est un alcool primaire avec 12 à 14 atomes de carbone éthoxylé avec de l'oxyde d'éthylène.

3. Utilisation selon la revendication 1, dans laquelle l'ester de sorbitan est du monolaurate de sorbitan polyoxyéthyléné.

4. Utilisation selon l'une quelconque des revendications précédentes, dans laquelle le composé est dilué à une concentration de 1 à 5% vol.

5. Utilisation selon l'une quelconque des revendications précédentes, dans laquelle les fruits à pépins sont des pommes ou des poires.

6. Procédé pour contrôler les taches sur les fruits à pépins, comprenant les étapes suivantes :
i) fourniture d'un composé contenant du squalane extrait d'huile d'olive dans une concentration de 70% vol. et d'un vecteur sélectionné parmi
- de l'acide oléique comme agent émulsifiant dans une concentration de 20% vol., de l'ammoniaque dans une concentration de 4% vol. et de l'eau déionisée dans une concentration de 6% vol. ou
- de l'acide gras d'huile de palme comme agent émulsifiant dans une concentration de 20% vol., de l'ammoniaque dans une concentration de 4% vol. et de l'eau déionisée dans une concentration de 6% vol. ou
- un alcool primaire ayant de 9 à 15 atomes de carbone comme agent émulsifiant dans une concentration de 30% vol. ou
- un ester de sorbitan comme agent émulsifiant dans une concentration de 30% vol.,
ii) dilution dudit composé à une concentration de 0,1 à 10% vol. et
iii) mise en contact dudit composant dilué avec la surface des fruits à pépins.

7. Procédé selon la revendication 6, selon lequel la mise en contact du composé dilué avec la surface des fruits à pépins est effectuée par immersion, nébulisation ou pulvérisation.

8. Procédé selon la revendication 6, selon lequel la mise en contact du composé dilué avec la surface des fruits à pépins est effectuée pendant au moins une seconde.

9. Procédé selon l'une quelconque des revendications 6 à 8, selon lequel les fruits à pépins sont des pommes ou des poires.

10. Procédé selon l'une quelconque des revendications 6 à 9, selon lequel, à l'étape ii), le composé est dilué à une concentration de 1 à 5% vol.
